# EUROPEAN PATENT APPLICATION

(11) **EP 4 012 586 A1**
(43) Date of publication of application: **15.06.2022**
(21) Application number: 20212982.1
(22) Date of filing: 10.12.2020
(51) Int. Cl.: G06F 21/52, G06F 11/30

(54) **SYSTEM FOR ACTIVELY MONITORING AND SECURING A COMPUTE- AND DATA-INTENSIVE ELECTRONIC DEVICE, CORRESPONDING METHOD AND COMPUTER PROGRAM PRODUCT**

(71) Applicant: Nagravision S.A., 1033 Cheseaux-sur-Lausanne (CH)
(72) Inventor: SCHMID, Christophe, 1033 CHESEAUX-SUR-LAUSANNE (CH); CONUS, Joel, 1033 CHESEAUX-SUR-LAUSANNE (CH)
(74) Representative: Ipside

(57) **Abstract**

A system (100) for actively monitoring and securing a CDI (110CDI) is proposed. Such system comprises a TEE (100TEE) implementing one or more monitoring policy rule for ruling the active monitoring of the CDI. The system further comprises an IC (100IC) comprising one or more monitoring device for monitoring the CDI at a corresponding monitoring tapping point delivering a corresponding monitoring information element. The IC is configured for providing to the TEE a monitoring information based on the monitoring information element. The IC is subordinated to the TEE. The one or more monitoring device is configured by the TEE responsive to the implementation of the one or more monitoring policy rule.

## Description

### 1. FIELD OF THE DISCLOSURE

The field of the disclosure is that of compute- and data-intensive electronic devices, hereafter CDI.

More specifically, the disclosure relates to systems and corresponding methods for improving the security of such CDI.

The disclosure can be of interest in any field where such CDI has to be used in a secure way. This is the case for instance in the context of diffusion of content (e.g. a multimedia content, a video content, etc.) in a pay-TV system.

### 2. TECHNOLOGICAL BACKGROUND

Compute-intensive processing is used to describe application programs that are compute bound. Such applications devote most of their execution time to computational requirements (as opposed to managing inputs and outputs transfers, hereafter I/O) and typically require small volumes of data. Parallel processing of compute-intensive applications typically involves parallelizing individual algorithms within an application process, and decomposing the overall application process into separate tasks, which can then be executed in parallel on an appropriate computing platform to achieve overall higher performance than serial processing.

Conversely, data-intensive processing is used to describe applications that are I/O bound or with a need to process large volumes of data. Such applications devote most of their processing time to I/O and movement and manipulation of data. Parallel processing of data-intensive applications typically involves partitioning or subdividing the data into multiple segments which can be processed independently using the same executable application program in parallel on an appropriate computing platform, then reassembling the results to produce the completed output data.

Consequently, compute- and data-intensive processing requires achieving a huge amount of parallel processing. Such CDI devices can be e.g. FPGA, GPU but also TPU (for "Tensor Processing Unit" targeting Al and ML, for "Artificial Intelligence" and "Machine Learning").

In that respect, Field Programmable Gate Arrays, hereafter FPGA, are interesting. Indeed, as from a technology node perspective, nowadays FPGA devices are fast and provide fast interfaces to outer world. They also provide many standard predefined blocks ready to be used and allow storing a personal hardware design, hereafter HW, in an encrypted and unique form per FPGA device (e.g. using a unique cryptographic key). FPGA's are also used as devices wherein any kind of algorithm written in a standard highlevel language (e.g. Java, C, Fortran) can be transformed and mapped into a hardware description language (e.g. Verilog, VHDL), hereafter HDL, that can be compiled and run on FPGA devices.

However, whereas FPGA's are very powerful and flexible devices, interesting enough for low volume and high unit prices, they also lack some important items. First, FPGA's have some kind of security mechanism (e.g. bitstream encryption), but that can be improved in term of security level and flexibility. Countermeasures have been proposed, but even partial reconfiguration may not be a satisfying answer for high security high performance applications. Second, even if FPGA look like flexible, changing to a larger extend the algorithm's rules on the fly is not possible and would mean to resynthesize another HW design that further needs to be validated, ciphered and loaded onto the FPGA device, a very time-consuming process

Nevertheless, there are not only FPGA which are fast, flexible to some extend and implemented on recent technology nodes (e.g. 14 or 7 nm). There are also graphic processing unit, hereafter GPU, which are interesting as standard and algorithmic computing can now be implemented on such GPUs. For instance, NVIDIA^{©} proposes a development environment that enables GPUs to execute programs written with C, C++, Fortran, OpenCL, DirectCompute, and other languages. One can thus program algorithms in C/C++ for instance, but instead of going through a HDL/HW synthesize process to get e.g. a bitstream packed HW design one can load and execute on a FPGA target, the GPU compiler does the job of mapping the algorithm onto the GPU. Such GPU based approach also takes advantage of a more massive parallel computing power and also an even strongly register oriented architecture than FPGA target. Finally, GPU can be faster than FPGA and more flexible than FPGA to some extent since all goes through pure software, hereafter SW, applications.

However, FPGA "security" remains superior to GPU "security". Indeed, algorithms ending e.g. as automata on a FPGA are better protected than on a GPU that remains widely open as of today. In that respect, known technics can be implemented in SW oriented device like GPU. For instance, trusted execution environment, hereafter TEE, or root of trust, hereafter RoT, can be integrated into a host device where the host device provides the flash memory which is inherently insecure. In this case, the TEE or RoT can create secure partitions by itself.

However, known architecture of TEE or RoT and their integration in such GPU leads to a loss of performances of the GPU, typically in term of speed of data processing. Indeed, the secured functionalities classically embedded in such TEE or RoT lead to a lower processing rate than achieved in CDI oriented GPU. Furthermore, a lack of flexibility can be observed if one tries to reduce the impact of such integration on the speed of data processing of the GPU.

There is thus a need for a solution for securing a CDI that does not have the drawbacks discussed above.

More particularly, there is a need for a solution that provides flexibility in the securing process of a CDI while not degrading the speed of data processing of the CDI.

### 3. SUMMARY

The present disclosure proposes a new and inventive solution for improving the security of a CDI in a flexible way while the speed of the data processing of the CDI is not degraded.

This goal is achieved by proposing a system for actively monitoring and securing a CDI. More particularly, such system comprises a TEE implementing at least one monitoring policy rule for ruling the active monitoring of the CDI. The system further comprises an interception circuit, hereafter IC, comprising at least one monitoring device for monitoring the CDI at a corresponding monitoring tapping point delivering a corresponding monitoring information element. The IC is configured for providing to the TEE a monitoring information based on the monitoring information element. The IC is subordinated to the TEE, which means that the at least one monitoring device is configured by the TEE responsive to the implementation of the at least one monitoring policy rule.

Thus, having the IC subordinated to the TEE, the TEE configures the monitoring devices based on the monitoring policy rules. Such active monitoring offers flexibility. For instance, in case of suspicion of an attack, the TEE can adapt the configuration of the monitoring devices (e.g. to monitor control like signals (e.g. clocks frequencies, temperature, supply voltages, memory accesses, signal toggling, etc.) as well as the data itself of the monitored traffic of the CDI (e.g. based on snort rules, data patterns)) or adapt IC and CDI behavior to some degree, for achieving a higher sensitivity in order to be more reactive in such situation. The security of the CDI is thus improved and put under control.

Furthermore, the monitoring of the CDI is performed by monitoring devices within the IC whereas the TEE implements the rules for the monitoring and securing of the CDI. Such partitioning allows a speed decoupling between the CDI and the TEE. The TEE is allowed to work at a lower speed, as TEE classically do due to the secured functionalities they necessarily embed, than the IC. The IC is therefore not necessarily a secure area in the meaning of a TEE, thus allowing the IC to work at a higher speed than the TEE.

In another aspect of the disclosure, a system for secure CDI is proposed. Such system comprises a CDI and a corresponding system as detailed above for actively monitoring and securing the CDI.

In another aspect of the disclosure, a method for actively monitoring and securing a CDI is proposed. Such method comprises:
- implementing, by a TEE, at least one monitoring policy rule for ruling the active monitoring;
- configuring, by the TEE, at least one monitoring device of an IC subordinated to the TEE, the configuring at least one monitoring device being implemented responsive to the implementing the at least one monitoring policy rule;
- monitoring, by the at least one monitoring device, said CDI at a corresponding monitoring tapping point delivering a corresponding monitoring information element, the monitoring the CDI being implemented responsive to the configuring the at least one monitoring device; and
- providing to the TEE, by said IC, a monitoring information based on the monitoring information element.

### 4. LIST OF FIGURES

Other features and advantages of embodiments shall appear from the following description, given by way of indicative and non-exhaustive examples and from the appended drawings, of which:
- Figure 1a illustrates a system for actively monitoring and securing a CDI according to one embodiment of the present disclosure;
- Figure 1b illustrates a system for actively monitoring and securing a CDI according to another embodiment of the present disclosure;
- Figure 2 illustrates a flowchart of a method for actively monitoring and securing a CDI according to one embodiment of the present disclosure;
- Figure 3 illustrates an exemplary device that can be used for implementing the method of figure 2.

### 5. DETAILED DESCRIPTION

In all of the figures of the present document, the same numerical reference signs designate similar elements and steps.

The disclosed technique relates to a system and method for actively monitoring and securing a CDI. As discussed above, the monitoring of the CDI is performed by monitoring devices within the IC subordinated to the TEE that implements the rules for the active monitoring and securing of the CDI. Such partitioning allows flexibility and speed decoupling between the CDI and the TEE. The TEE is allowed to work at a lower speed, as TEE classically do due to the secured functionalities they necessarily embed, than the IC. The speed of the CDI thus remains unaffected by the presence of the TEE.

A TEE is a secure area of one or more processor. It guarantees code and data loaded inside to be protected with respect to confidentiality (i.e. preventing sensitive information from reaching the wrong people, close to privacy), integrity (i.e; maintaining the consistency, accuracy, and trustworthiness of data over its entire life cycle), authenticity (i.e. determining whether someone or something is, in fact, who or what it declares) and availability (i.e. maintaining a correctly functioning even if under attack). A TEE as an isolated execution environment provides security features such as isolated execution, integrity of applications executing with the TEE, along with confidentiality of their assets. A TEE is treated as a piece of secure HW silicon device and secure SW running on it. Such asset is also commonly called a trusted computing base, hereafter TCB, in a larger sense.

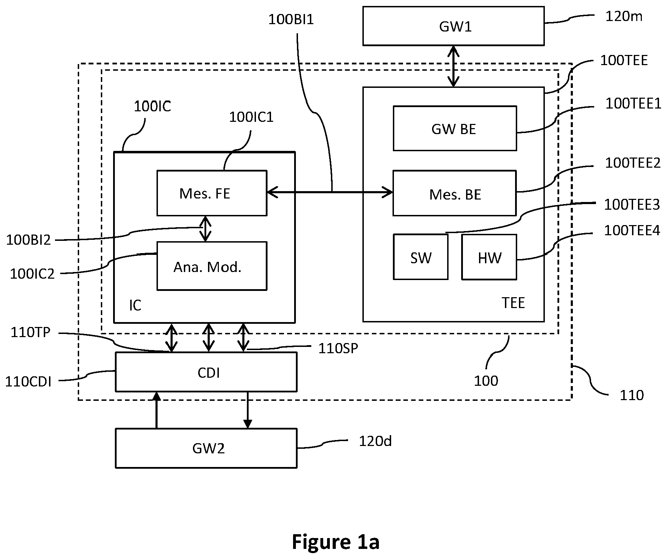

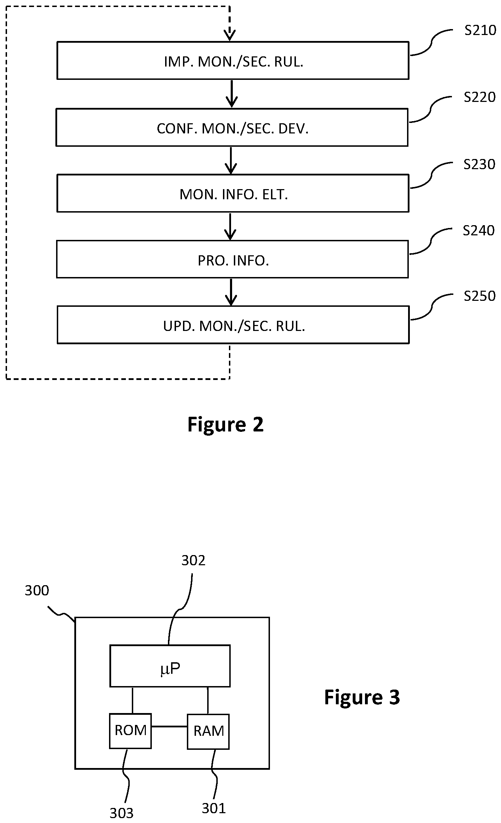

Referring now to **figure 1a****,** we illustrate a system 100 for actively monitoring and securing a CDI 110CDI according to one embodiment of the present disclosure. The system 100 is configured for implementing the method for actively monitoring and securing the CDI 110CDI illustrated in **figure 2****.**

More particularly, the system 100 comprises:
- a TEE, labeled 100TEE; and
- an IC, labelled 100IC.

The IC 100IC provides means of telling at a HW level where exactly we want to tap in the CDI 110CDI. In that respect, the IC 100IC comprises at least one monitoring device for monitoring the CDI 110CDI at a corresponding monitoring tapping point 110TP. Such monitoring device (e.g. to monitor control like signals (clocks frequencies, temperature, supply voltages, memory accesses, signal toggling, etc.) as well as the data itself of the monitored traffic of the CDI 110CDI) delivers a corresponding monitoring information element.

More particularly, the TEE 100TEE implements one or more monitoring policy rule for ruling the active monitoring of the CDI 110CDI. The IC 100IC is subordinated to the TEE 100TEE. In other words, the TEE 100TEE behaves as the master and the IC 100IC as the slave. In particular, the at least one monitoring device of the IC 100IC is configured by the TEE 100TEE responsive to the implementation of the at least one monitoring policy rule.

As an example, a monitoring policy rule may require monitoring the temperature of the CDI 110CDI at a particular tapping point 110TP. Responsive to the implementation of such monitoring policy rule, the TEE 100TEE configures a corresponding temperature sensor (e.g. in term of sensitivity, frequency of monitoring, etc.) of the IC 100IC for sensing the temperature of the CDI 110CDI at the corresponding tapping point 110TP. Such active monitoring thus offers flexibility.

In some embodiments, the IC 100IC requires the piece of CDI 110CDI HW being monitored to provide for some resources such as special registers, internal state means or signaling infrastructure to help getting a correct and accurate view into the CDI 110CDI functioning and overall (real) state. The monitoring information elements correspond to information that reflects such internal state or signaling.

In some embodiments, the IC 100IC requires looping a data path of the CDI 110CDI into e.g. the middle of a fiber heads and let the data payload and traffic flow through while it gets analyzed in real-time with no impact on latency or bandwidth for the CDI 110CDI.

In any case, the monitoring of the CDI 110CDI is performed by monitoring devices within the IC 100IC whereas the TEE 100TEE implements the rules for the monitoring and securing of the CDI 110CDI. Such partitioning allows a speed decoupling between the CDI 110CDI and the TEE 100TEE. Indeed, the monitoring devices being the only contact points with the CDI 110CDI, the TEE 100TEE is allowed to work at a lower speed, as TEE 100TEE classically do due to the secured functionalities they necessarily embed, than the IC 100IC.

Back to figure 1a, the IC 100IC is configured for providing to the TEE 100TEE a monitoring information based on the monitoring information element. In that perspective, the IC 100IC comprises in the present embodiment an analysis module 100IC2 configured for implementing a processing of the monitoring information elements delivering the monitoring information. For instance, the analysis module 100IC2 performs averaging of monitoring information elements for delivering the monitoring information to be provided to the TEE 100TEE. For instance, the monitoring information is data at a lower rate than the monitoring information elements retrieved from the monitoring devices. Thus, the IC 100IC processes at least part of the monitored information elements that are retrieved from the CDI 110CDI at a high data rate in order to deliver the monitored information to the TEE 100TEE at a lower data rate. In other variants, other processing of the monitoring information elements is implemented in the analysis module 100IC2 like e.g. correlations with predetermined patterns, sampling, filtering, triggering, etc.

In other embodiments, the IC 100IC does not comprise such analysis module 100IC2 and all or parts of the monitoring information elements are provided to the TEE 100TEE.

In some embodiments, the TEE 100TEE implements one or more securing policy rule for ruling the active securing of the CDI 110CDI. More particularly, the IC 100IC comprises at least one securing device for acting on the CDI 110CDI at a corresponding securing point 110SP. The at least one securing device is configured by the TEE 100TEE responsive to the implementation of the at least one securing policy rule and based on the monitoring information. For instance, reconsidering the example discussed above wherein the temperature of the CDI 110CDI is sensed at a corresponding tapping point 110TP, a securing policy rule implemented within the TEE 100TEE may require decreasing a corresponding supply voltage of the CDI 110CDI when such temperature increases and becomes higher than a predetermined value. In this case, the TEE 100TEE configures a securing device (e.g. a control of a regulator supplying the CDI 110CDI) of the IC 100IC for decreasing the corresponding supply voltage of the CDI 110CDI.

In other examples, the TEE configures the securing devices e.g. for switching off a data path, for changing memory mappings on the fly (e.g. using offsets and multiplexers) when the implementation of the securing policy rules indicate that an attack is on-going based on the monitoring information. IC being subordinated to TEE acts on CDI to a certain extend to adapt the CDI behavior as a response to e.g. an attack.

In some embodiments, the TEE 100TEE is configured to update:
- the one or more monitoring policy rule based on the monitoring information delivering one or more corresponding updated monitoring policy rule; and/or
- the one or more securing policy rule based on the monitoring information delivering one or more corresponding updated securing policy rule.

The TEE 100TEE is further configured to:
- implement the one or more updated monitoring policy rule and/or implement the one or more updated securing policy rule; and
- configure the at least one monitoring device responsive to the implementation of the one or more updated monitoring policy rule and/or configure the at least one securing device responsive to the implementation of the one or more updated securing policy rule and based on the monitoring information.

Thus, the active monitoring and securing of the CDI 110CDI is always in line with the present state of the CDI 110CDI as monitored by the monitoring devices of the IC 100IC.

Back to figure 1a, the system 100 comprises a first bidirectional interface 100BI1 between the TEE 100TEE and the IC 100IC. The TEE 100TEE is configured for sending instructions to the IC 100IC through the first bidirectional interface 100BI1 for configuring the at least one monitoring device and/or the at least one securing device. The IC 100IC is configured for sending the monitoring information to the TEE 100TEE through the first bidirectional interface 100BI1. In that respect, the IC 100IC comprises a message front-end module 100IC1 and the TEE 100TEE comprises a message back-end module 100TEE2. The first bidirectional interface 100BI1 takes place between the message front-end module 100IC1 and the message back-end module 100TEE2.

In some embodiments, the first bidirectional interface 100BI1 is configured for sending data at a data rate lower than a data rate of a monitored traffic of the CDI 110CDI. For instance, the data rate of the monitored traffic may classically be in the range e.g. of 10 to 100 GHz. Conversely, the TEE 100TEE may classically be clocked in the range e.g. of 1 MHz to 1 GHz. In some embodiments, the data rate on the first bidirectional interface 100BI1 is thus lower than the data rate of the monitored traffic divided by 100. In this case, the first bidirectional interface 100BI1 is a low speed interface.

The IC thus behaves as a speed decoupling block between the CDI 110CDI (whose data rate of a monitored traffic can be in the range e.g. of 10 to 100 GHz) and the TEE 100TEE (that can be clocked in the range e.g. of 1 MHz to 1 GHz).

Back to figure 1a, the IC 100IC comprises a second bidirectional interface 100BI2 between the analysis module 100IC2 and the message front-end module 100IC1. The message front-end module 100IC1 is configured for forwarding, to the analysis module 100IC2 and through the second bidirectional interface 100BI2, the instructions received from the TEE 100TEE. The analysis module 100IC2 is configured for configuring the at least one monitoring device and/or the at least one securing device based on those instructions. The analysis module 100IC2 is configured for sending, to the message front-end module 100IC1 and through the second bidirectional interface 100BI2, the monitoring information for further transmission by the message front-end module 100IC1 to the TEE 100TEE through the first bidirectional interface 100BI1.

In some embodiments, the second bidirectional interface 100BI2 is configured for sending data at a data rate lower than the data rate of the monitored traffic and higher than the data rate of the first bidirectional interface 100BI1. For instance, the data rate of the second bidirectional interface 100BI2 is in the range of 1 to 10 GHz. Reconsidering the order to magnitudes given as examples above for the data rate of the monitored traffic of the CDI 110CDI and of the first bidirectional interface 100BI1, it means that in some embodiments the data rate of the second bidirectional interface 100BI2 is lower than the data rate of the monitored traffic divided by 10 and higher than 10 times the data rate of the first bidirectional interface 100BI1. In this case, the second bidirectional interface 100BI2 is a medium speed interface that can be an interface e.g. of the type Ethernet, Media-Independent Interface (Mil), Serial Advanced Technology Attachment (SATA), Universal Serial Bus (USB), Peripheral Component Interconnect express (PCI-e), etc.

Back to figure 1a, the TEE 100TEE comprises a back-end module, hereafter GW BE, labelled 100TEE1, for interfacing with a gateway device, hereafter GW, labeled 120m. More particularly, the external GW 120m allows the TEE 100TEE to communicate (e.g. via a PCI-e bus) with the outer world hosts to access e.g. to remote services accessible through the GW. Such services are e.g. SW attestation, Diffie-Hellman Key Exchange (hereafter DKE), authenticated key agreement, event monitoring, alerting, firmware update, counter measures (e.g. incident response), policy management (predefined actions), etc. In a way they are the remote extension of the TEE, or viewed differently, these cloud services are the master and the TEE is the slave. When disconnected, the TEE can ensure local security monitoring but when connected the cloud can monitor events globally and take action. This cloud part is essentially a Security Operations Center (SOC). The benefit of centralized monitoring is that when an attack occurs on a given device, the countermeasure can be dispatched quickly to all devices in order to prevent further attacks of the same kind.

The TEE 100TEE comprises a SW module 100TEE3 that behaves as a secured container that provides support for different functionalities like e.g. DKE, authenticated key agreement and storage and update, firmware storage and update, active monitoring and securing policy rules storage and update, counter-measures etc.

The TEE 100TEE comprises a HW module 100TEE4 that provides support for different functionalities comprising e.g. busses and peripherals HW support, key manager, cryptography assistance/acceleration, protocol assistance/acceleration, persistent storage, volatile storage, container assistance, secure processor cores(s), etc.

The CDI 110CDI is connected to another GW, labeled 120d. The external GW 120d allows the CDI 110CDI to communicate (e.g. via an Ethernet link) with the outer world hosts to access through the GW e.g. to the data to be processed.

In some embodiments, the external GW 120d and the external GW 120m are a same GW.

Back to figure 1a, the system 110 comprising the system 100 (in any of the embodiments discussed above) and the CDI 110CDI is a system for secure compute- and data-intensive computing.

In some embodiments, the IC 100IC and the TEE 100TEE are electronic modules integrated on a same silicon die for providing a corresponding electronic device (e.g. an integrated circuit) that can interface with the CDI 110CDI.

In some embodiments, the IC 100IC and the TEE 100TEE are electronic modules integrated on different silicon dies for providing different electronic devices. The IC 100IC and the TEE 100TEE devices then interface with the CDI 110CDI, e.g. in a SoC (e.g. with the two dies bonded internally on the same support).

In some embodiments, the IC 100IC module is provided to the manufacturer of the CDI 110CDI, e.g. in a form of an HDL netlist, for a direct integration into the CDI 110CDI. In this case, in some embodiments the TEE 100TEE is a different electronic device that securely interfaces with the device the IC 100IC and the CDI 110CDI are integrated in (e.g. in a SoC). Alternatively, the TEE 100TEE is integrated in the same silicon die than the IC 100IC and the CDI 110CDI for providing a secure CDI electronic device integrated in a single silicon die.

Depending on the embodiments, a module thus represents an electronic device or an HDL description of such electronic device. In both cases, the module may comprise the SW necessary to have the HW of the electronic device to implement the corresponding functionalities.

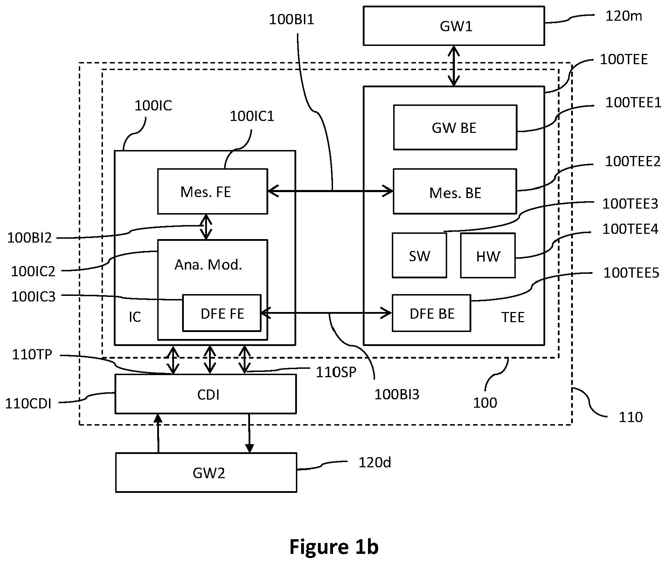

Referring now to **figure 1b****,** we illustrate another embodiment of the system 100 for actively monitoring and securing the CDI 110CDI. The system 100 according to this embodiment is configured for implementing the method for actively monitoring and securing the CDI 110CDI illustrated in **figure 2****.**

The system 100 according to the embodiment of figure 1b comprises all the functional blocks discussed above in relation with figure 1a (in any of the discussed embodiments).

However, depending on the architectural choices for the implementation of the IC 100IC, the IC 100IC may not be able to sustain during a long period a high amount of data retrieved from of the CDI 110CDI being monitored. This may be the case for instance when the IC 100IC is control flow driven instead of data flow driven.

For improving the capacity of the system 100 to sustain during a long period a high amount of data retrieved from the CDI 110CDI, a data flow engine front-end, hereafter DFE FE, 100IC3 is implemented in the IC 100IC for intercepting at least part of the monitoring information elements monitored from the CDI 110CDI.

The DFE FE 100IC3 is configured for sending the intercepted monitoring information elements to the TEE 100TEE. In that perspective, the system 100 comprises a third bidirectional interface 100BI3 between the DFE FE 100IC3 and a data flow engine back-end, hereafter DFE BE, 100TEE5 of the TEE 100TEE.

For instance, the data rate of the third bidirectional interface 100BI3 is in the same range as of the data rate of the second bidirectional interface 100BI2 (e.g. in the range of 1 to 10 GHz). In this case, the third bidirectional interface 100BI3 is a medium speed interface that can be an interface e.g. of the type Ethernet, Media-Independent Interface (Mil), Serial Advanced Technology Attachment (SATA), Universal Serial Bus (USB), Peripheral Component Interconnect express (PCI-e), etc.

Referring now to **figure 2****,** we illustrate a flowchart of a method, implemented by the system 100, for actively monitoring and securing the CDI 110CDI

In a **step S210,** the TEE 100TEE implements the one or more monitoring policy rule (discussed above in relation with figures 1a and 1b) for ruling the active monitoring of the CDI 110CDI

In a **step S220,** the TEE 100TEE configures the at least one monitoring device of the IC 100IC responsive to the implementation of the step S210.

In a **step S230,** the at least one monitoring device of the IC 100IC monitors the CDI 110CDI at the corresponding monitoring tapping point 110TP delivering a corresponding monitoring information element. The step S230 is implemented responsive to the implementation of the step S220.

In a **step S240,** the IC 100IC provides to the TEE100TEE the monitoring information based on the monitoring information element.

In some embodiments, the TEE 100TEE further implements in the step S210 the one or more securing policy rule (discussed above in relation with figures 1a and 1b) for ruling the active securing of the CDI 110CDI. The TEE 100TEE further configures in step S220 the at least one securing device of the IC 100IC based on one hand, on the implementation of the one or more securing policy rule and, on the other hand, on the monitoring information.

In some embodiments, in a **step S250,** the TEE 100TEE updates:
- the at least one monitoring policy rule based on the monitoring information delivering at least one updated monitoring policy rule; and/or
- the at least one securing policy rule based on the monitoring information delivering at least one updated securing policy rule.

In those embodiments, the TEE 100TEE implements again the steps S210 and S220 (in any of the embodiments discussed above) but now based on the updated monitoring policy rule and/or updated securing policy rule. The steps S230 and S240 are further implemented responsive to the implementation of steps S210 and S220.

The sequence of steps S210, S220, S230, S240 and S250 can thus be implemented as an iterative process. The system 100 can thus be seen as a self-adapting setup that has the capacity to react by itself, regardless the system 100 is connected or not to the GW 120m.

In other embodiments, the method, implemented by the system 100, for actively monitoring and securing the CDI 110CDI, comprises all the acts of the IC 100IC and of the TEE 100TEE described above in relation with figures 1a and 1b (according to any of the embodiments discussed in relation with figures 1a and 1b).

We now illustrate the steps of the method for actively monitoring and securing the CDI 110CDI of figure 2 through practical examples of implementation.

For instance, in some implementations, the CDI 110CDI is a network chip with at least two e.g. 100Gbps HDL medium access control (hereafter MAC) block interfaces. The 100Gbps interfaces connect to the second gateway 120d. The CDI's role is for instance to route and monitor traffic going over both interfaces in both directions.

The CDI 110CDI device may integrate one or more CPU's or special purpose processors such as FPGAs and / or a combination of all this. For instance, the CDI 110CDI device implements itself e.g. a CPU and a FPGA using data flow engines and associated kernels solution.

The first gateway 120m is connected to the TEE 100TEE, e.g. through the TEE GW BE module 100TEE1. For instance, the connection between the first gateway 120m and the back-end module 100TEE1 occurs in a secure and trusted way. For that, the TEE 100TEE namely comes already equipped from manufacturing to immediately allow for SW attestation, DKE (Diffie-Hellman Key Exchange) and authenticated key agreement. This can include for instance:
- RK: Manufacturer CA root key (RK) pair, unique per TEE 100TEE chip;
- AK: Attestation key (AK), private to sign «measure and data», public «PrivRK signed» as certificate.

This allows to:
- convince external verifier attestation was produced outside interference by TCB (Trusted Computing Base) - data, signature and measurement;
- assure external verifier it has established a shared secret with the TCB (here the TEE 100TEE).

Once this secure communication channel is setup and in place between the first gateway 120m and back-end module 100TEE1, various information can be brought into the TEE 100TEE like updated firmware for the TEE 100TEE that will be executed as software, e.g. in the SW module 100TEE3 on the special HW module 100TEE4, and drive the BE modules 100TEE1 and/or 100TEE2 and/or 100TEE5.

### First variants:

In some implementations, the IC 100IC is control flow driven and the TEE 100TEE is programmed with a monitoring policy rule that rules the monitoring of the supply voltage of one given CPU of the CDI 110CDI

Accordingly, implementing the step S220, the TEE 100TEE configures a monitoring device of the IC 100IC, e.g. an analog-to-digital converter (hereafter ADC), responsive to the implementation of the step S210. The ADC is thus configured for converting into the digital domain the supply voltage of the given CPU of the CDI 110CDI.

Implementing the step S230, the ADC of the IC 100IC monitors the CDI 110CDI at the corresponding monitoring tapping point 110TP, e.g. at a power supply pin, delivering a corresponding monitoring information element, i.e. the measured supply voltage.

Implementing the step S240, the IC 100IC provides to the TEE100TEE whether the measured supply voltage or an information based on the measured supply voltage, e.g. a noise filtered version of the measured supply voltage. Such measurement or information is sent by the IC 100IC to the TEE 100TEE via the interface 100IC1 whenever a new measurement or information is obtained, e.g. at a frequency corresponding to the ADC sampling rate (e.g. 100kHz or 1MHz).

The TEE 100TEE is further programmed via the first gateway 120m with a securing policy rule that rules the securing of the CDI 110CDI. More particularly, the securing policy rule corresponds to the checking that the supply voltage of the given CPU of the CDI 110CDI is within a predetermined range. Implementing again the step S210, the TEE 100TEE thus checks that the supply voltage of the given CPU is between e.g. 1.2 V and 1.4 V. Such voltage range corresponds for instance to a normal voltage supply for the given CPU. For instance, a supply voltage lower than 1.2V could lead to glitches in the behavior of the CPU. Consequently, the detection of a supply voltage that is outside such range would be indicative of a potential attack. Thus, if the measured supply voltage is lower than 1.2V or higher than 1.4V, the TEE 10TEE for instance shuts down the CDI 110 and reports the potential attack toward the first gateway 120m.

Implementing the step S250, the TEE 100TEE updates the securing policy rule (i.e. implements an incident response, or a countermeasure). In the present example, the TEE 100TEE for instance reduces the supply voltage range of the securing policy rule between 1.3 and 1.35V to be more reactive in case of an attack based on a modification of the supply voltage (or to be less sensitive to uncertainties of implementations of the board when deciding of a potential attack).

In some implementations, the TEE 100TEE implements again the steps S210 and S220 (in any of the embodiments discussed above) but now based on the updated monitoring policy rule and/or updated securing policy rule. The steps S230 and S240 are further implemented responsive to the implementation of steps S210 and S220. The sequence of steps S210, S220, S230, S240 and S250 can thus be implemented as an iterative process.

### Second variants:

In some implementations, the IC 100IC is data flow driven. More particularly, the architecture of the data flow driven IC 100IC is now supposed to embed a DFE FE 100IC3 as discussed above in relation with Figure 1b.

For instance, the firmware embedded in the TEE 100TEE can also embed other executable code or HW design bitstream for both IC's DFE FE 100IC3 and its pair TEE's DEF BE 100TEE5 for configuration / control purpose of DFE. For instance, DFE embeds a FPGA and a classic CPU base where FPGA hosts and executes the DFE and associated kernels and CPU hosts and executes the control. The DFE embeds also a manager to allow communication over the interface 100BI3 with an external general-purpose CPU such as we can find in the TEE 100TEE and more specifically in the HW module 100TEE4. The DFE kernels and manager come as a hardware design bitstream that came in over a secured and authenticated connection into the 100TEE via the first gateway 120m. The DFE data flow engine on CPU side contains an OS or service and an interface API that allows the CPU side to load, configure and control the FPGA side where DFE and kernels run. The CPU and FPGA interconnect e.g. by a PCI-e. The interface 100BI3 serves to load, control and reconfigure the DFE FE 100IC3 from the DFE BE 100TEE5. The interface 100BI3 also serves the DFE BW 100TEE5 to get information and data back from the DFE FE 100IC3. The DFE BE 100TEE5 contains at least an OS/service and an interface API allowing to communicate with the DFE and kernel and associated manager on FPGA side.

For instance, the TEE 100TEE is programmed with a monitoring policy rule that makes the TEE to program a pattern detection block in the DFE FE 100IC3 for making the DFE FE 100IC3 and DFE BE 100TEE5 to reroute (loop-through type) and analyze a high-speed internal bus (e.g. AMBA bus) of the CDI 110CDI. Accordingly, implementing the step S220, the TEE 100TEE configures the DFE FE 100IC3 and the DFE BE 100TEE5 to reroute and analyze the considered high-speed internal bus of the CDI 110CDI. Such analysis capability comprises the implementation of a pattern detection block that can identify predetermined patterns going toward the considered high-speed internal bus.

Implementing the step S230, the pattern detection block of the IC 100IC monitors the CDI 110CDI at the corresponding monitoring tapping point 110TP delivering a corresponding monitoring information element corresponding e.g. to a detected pattern. The step S230 is implemented responsive to the implementation of the step S220.

Implementing the step S240, the IC 100IC provides, through the DFE FE 100IC3 and DFE BE 100TEE5, to the TEE 100TEE the monitoring information based on the monitoring information element. For instance, the IC 100IC reports that it has detected a predetermined patten, e.g. a translation look-aside buffer (TLB) configuration.

The TEE 100TEE is further programmed via the first gateway 120m with a securing policy rule that rules the securing of the CDI 110CDI. More particularly, the considered securing policy rule rules the checking that the detected predetermined patten corresponds to an attempt to corrupt the configuration of the TLB in question. Implementing again the step S210, the TEE 100TEE thus checks that the TLB configuration that corresponds to the detected predetermined patten is allowed. If this is not the case, the TEE 100TEE programs the DFE FE 100IC3 of the IC 100IC for having the DFE FE 100IC3 to reprogram correctly the TLB.

Implementing the step S250, the TEE 100TEE updates the monitoring policy rule for having an update of the configuration of the pattern detection block implemented in the DFE FE 100IC3 (e.g. a parameter register, a mux). This is done e.g. for refining the translation range of the TLB to be detected.

In some implementations, the TEE 100TEE implements again the steps S210 and S220 (in any of the embodiments discussed above) but now based on the updated monitoring policy rule and/or updated securing policy rule. The steps S230 and S240 are further implemented responsive to the implementation of steps S210 and S220. The sequence of steps S210, S220, S230, S240 and S250 can thus be implemented as an iterative process.

Referring now to **figure 3****,** we illustrate the structural blocks of an exemplary device 300 that can be used for implementing at least part of the method for actively monitoring and securing a CDI according to the disclosure (according to any of the embodiments disclosed above).

In an embodiment, a device 300 comprises a non-volatile memory 303 (e.g. a read-only memory (ROM), a hard disk, a flash memory, etc.), a volatile memory 301 (e.g. a random-access memory or RAM) and a processor 302 (e.g. a secure processor). The memories may be configured to behave as a secure container. The non-volatile memory 303 is a non-transitory computer-readable carrier medium. It stores executable program code instructions, which are executed by the processor 302 in order to enable implementation of at least part of the method described above (method for actively monitoring and securing a CDI) in the various embodiment disclosed in relationship with figure 2.

Upon initialization, the aforementioned program code instructions are transferred from the non-volatile memory 301to the volatile memory 303 so as to be executed by the processor 302. The volatile memory 303 likewise includes registers for storing the variables and parameters required for this execution.

All the steps of the method for actively monitoring and securing a CDI according to the disclosure may be implemented equally well:
- by the execution of a set of program code instructions executed by a reprogrammable computing machine such as a PC type apparatus, a DSP (digital signal processor), a GPU, TPU, a CPU core or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the device 300 comprises the IC 100IC and/or the TEE 100TEE.

In some embodiments, the device 300 is the system 100.

## Claims

1. System (100) for actively monitoring and securing a compute- and data-intensive electronic device (110CDI), hereafter CDI, said system comprising:
- a trusted execution environment electronic module (100TEE), hereafter TEE, implementing at least one monitoring policy rule for ruling said active monitoring;
- an interceptor electronic module (100IC), hereafter IC, comprising at least one monitoring device for monitoring said CDI at a corresponding monitoring tapping point delivering a corresponding monitoring information element, said IC being configured for providing to said TEE a monitoring information based on said monitoring information element,
**characterized in that** said IC is subordinated to said TEE, said at least one monitoring device being configured by said TEE responsive to said implementing said at least one monitoring policy rule.

2. System according to claim 1 wherein said TEE implements at least one securing policy rule for ruling said active securing,
and wherein said IC comprises at least one securing device for acting on said CDI at a corresponding securing point, said at least one securing device being configured by said TEE responsive to said implementing said at least one securing policy rule and based on said monitoring information.

3. System according to claim 1 or 2 wherein said TEE is configured to update said at least one monitoring policy rule based on said monitoring information delivering at least one updated monitoring policy rule and/or to update said at least one securing policy rule based on said monitoring information delivering at least one updated securing policy rule, and wherein said TEE is configured to:
- implement said at least one updated monitoring policy rule and/or implement said at least one updated securing policy rule; and
- configure said at least one monitoring device responsive to said implementing said at least one updated monitoring policy rule and/or configure said at least one securing device responsive to said implementing said at least one updated securing policy rule and based on said monitoring information.

4. System according to any of the preceding claims comprising a first bidirectional interface between said TEE and said IC,
said TEE being configured for sending instructions to said IC through said first bidirectional interface for configuring said at least one monitoring device and/or said at least one securing device,
said IC being configured for sending said monitoring information to said TEE through said first bidirectional interface.

5. System according to claim 4 wherein said first bidirectional interface is configured for sending data at a data rate lower than a data rate of a monitored traffic of said CDI, preferably at a data rate lower than said data rate of said monitored traffic divided by 100.

6. System according to any of the preceding claims wherein said IC comprises an analysis module configured for implementing a processing of said monitoring information element delivering said monitoring information.

7. System according to claim 6 in that it depends on claim 4 or 5 comprising a second bidirectional interface between said analysis module and a message front-end module, said message front-end module being configured for forwarding, to said analysis module and through said second bidirectional interface, said instructions received from said TEE, said analysis module being configured for configuring said at least one monitoring device and/or said at least one securing device based on said instructions,
said analysis module being configured for sending, to said message front-end module and through said second bidirectional interface, said monitoring information for further transmission by said message front-end module to said TEE through said first bidirectional interface.

8. System according to claim 7 wherein said second bidirectional interface is configured for sending data at a data rate lower than said data rate of said monitored traffic, preferably at a data rate lower than said data rate of said monitored traffic divided by 10,
and wherein said second bidirectional interface is configured for sending data at a data rate higher than said data rate of said first bidirectional interface, preferably at a data rate higher than 10 times said data rate of said first bidirectional interface.

9. System according to any of the claims 1 to 8 wherein said IC comprises a data flow engine front-end module configured for intercepting at least part of the monitoring information element delivering at least one intercepted monitoring information element, wherein said system comprises a third bidirectional interface between said data flow engine front-end module and a data flow engine back-end module of said TEE,
said data flow engine front-end module being configured for forwarding, to said data flow engine back-end and through said third bidirectional interface, said at least one intercepted monitoring information element.

10. System according to claim 7 in that it depends on claim 4 or 5, wherein said third bidirectional interface is configured for sending data at a data rate lower than said data rate of said monitored traffic, preferably at a data rate lower than said data rate of said monitored traffic divided by 10,
and wherein said third bidirectional interface is configured for sending data at a data rate higher than said data rate of said first bidirectional interface, preferably at a data rate higher than 10 times said data rate of said first bidirectional interface.

11. System (110) for secure compute- and data-intensive computing, said system comprising a compute- and data-intensive computing electronic device (110CDI), **characterized in that** it further comprises a system (100) according to any of the claims 1 to 10 for actively monitoring and securing said compute- and data-intensive electronic device.

12. Method for actively monitoring and securing a compute- and data-intensive electronic device (110CDI), hereafter CDI, said method comprising:
- implementing (S210), by a trusted execution environment electronic device (100TEE), hereafter TEE, at least one monitoring policy rule for ruling said active monitoring,
- monitoring (S230), by at least one monitoring device of an interceptor electronic device (100IC), hereafter IC, said CDI at a corresponding monitoring tapping point delivering a corresponding monitoring information element,
- providing (S240) to said TEE, by said IC, a monitoring information based on said monitoring information element,
**characterized in that**, said IC being subordinated to said TEE, the method comprises:
- configuring (S220), by said TEE, said at least one monitoring device responsive to said implementing said at least one monitoring policy rule, said monitoring said CDI being implemented responsive to said configuring said at least one monitoring device.

13. Method according to claim 12 further comprising:
- implementing, by said TEE, at least one securing policy rule for ruling said active securing,
- configuring, by said TEE, at least one securing device of said IC based on one hand, on said implementing said at least one securing policy rule and, on the other hand, on said monitoring information.

14. Method according to claim 12 or 13 further comprising:
- updating, by said TEE, said at least one monitoring policy rule based on said monitoring information delivering at least one updated monitoring policy rule and/or updating said at least one securing policy rule based on said monitoring information delivering at least one updated securing policy rule;
- implementing, by said TEE, said at least one updated monitoring policy rule and/or implement said at least one updated securing policy rule; and
- configuring, by said TEE, said at least one monitoring device responsive to said implementing said at least one updated monitoring policy rule and/or configuring said at least one securing device responsive to said implementing said at least one updated securing policy rule and based on said monitoring information.

15. Computer program product **characterized in that** it comprises program code instructions for implementing a method according to at least one of the claims 12 to 14, when said program is executed on a computer or a processor.
